# EUROPEAN PATENT APPLICATION

(11) **EP 1 393 704 A1**
(43) Date of publication of application: **03.03.2004**
(21) Application number: 03077610.8
(22) Date of filing: 20.08.2003
(51) Int. Cl.: A61J 9/04

(54) **Baby feeding device**

(30) Priority: 24.08.2002 KR 2002050357
(71) Applicant: Ahn, Kyo Hoon, Seoul 110-340 (KR)
(72) Inventor: Ahn, Kyo Hoon, Seoul 110-340 (KR)
(74) Representative: Siniscalco, Fabio

(57) **Abstract**

The present invention relates to a baby feeding device which comprises a check valve (5). More particularly, the present invention is directed to a baby feeding device having a nipple (2), a bottle (1), the first inner tube (4) deployed in inside of the bottle (1), an outer extension tube (11), which comprises a magnetic check valve (5) for air inflow.

## Description

### Technical field

The present invention relates to a baby feeding device which comprises a check valve. More particularly, the present invention is directed to a baby feeding device having a nipple, a bottle, the first inner tube deployed in inside of the bottle, an outer extension tube, which comprises a check valve for air inflow.

### Backgraound Art

The baby feeding device used in general, consists of a nipple, a bottle and a connecting device combining the bottle with the nipple.

In the conventional baby feeding device, the nipple is directly connected with the bottle without flexible or bendable part between them, it is not easy to feed baby in upright or erect position. To solve this problem, a baby feeding device has been suggested wherein a flexible extension tube is interpositioned between a bottle and a nipple.

Another problem results from the conventional baby feeding device is that, upon baby sucking milk, the inner pressure of the bottle is reduced. The reduced pressure of the bottle creates a reverse force which stands against the suction force of baby mouth. Consequently, baby should suck harder the nipple to intake milk from the bottle with the lapse of time. As this situation repeats, the balance of pressure between the middle ear and the ambient air pressure fails to function properly, and it may lead to earaches.

Moreover, when baby sucks milk from this feeding device, baby intakes not only milk but also air, which may cause belching or vomit.

To solve these problems, US patent No.6,588,613 describes a nipple which mimic the function of the human breast nipple wherein milk is delivered to the baby through 15 - 25 fluid delivery capillaries called lactiferous ducts. Also, a nipple which has fluid delivery passage comprises a porous reticulated foam with interconnected pores, has been known to public.

However, the baby feeding devices which have such kinds of nipples or outer extension tubes, still have serious problem that milk remains in the lactiferous duct, delivery passage or small tube after breaking of suction of baby.

The residual milk in tubes or ducts can leak out through the hole of nipple into the baby's mouth, get to stagnate in there. If baby's teeth are exposed for many hours in this situation, it leads to nursing caries.

Furthermore, such micro tubes used in these prior arts cannot be washed or pasteurized easily due to their small inside diameter. Milk residue in such micro tube is likely to be spoiled and also cause oral maladies on baby.

The elastomeric diaphragm with resealable perforation, being a mechanical type of check valve, used in the conventional baby feeding device, possess the problems associated with leakage of milk due to incomplete closure. This can result from clogging, such as particulate lodging in the slit or from distortions in the slit. This distortions can be caused by elastomeric material changes(resulting from prolonged exposure to heat or ultraviolet light) or from mechanical stress on the edges of the slit as they open or close.

Therefore, it is obvious that there is need for a novel baby feeding device that can stop outflow or leakage of milk and does not allow milk residue in tubes by returning the milk residue in the tube back to bottle when baby stops suction.

Accordingly, the object of the present invention is to provide a baby feeding device which comprises a simple check valve suitable particularly for baby feeding device, that is, capable of stopping outflow or leakage of milk and capable of returning residual milk in tubes back to the bottle when baby stops suction.

Another object of the present invention is to provide a baby feeding device which can make it possible to feed baby freely even in an upright or an erect position by inserting a outer extension tube between the nipple and the bottle which comprises the check valve for air inflow.

### Disclosure of Invention

The object of the present invention can be achieved by providing a baby feeding device having a nipple(2), a bottle(1), the first inner tube(4) deployed in inside of the bottle, a check valve(5) for air inflow, a coupling means(3) which combine the bottle(1) with the check valve(5) and a outer extension tube(11) which connects the first inner tube(4) with the nipple(2), wherein the check valve(5) comprises a magnetic valve disk(8) coated with visco-elastic materials such as rubber and a metallic valve body(9) which contains small orifice(12) for air inflow.

The baby feeding device of the present invention is characterized in that the check valve(5) which allows air inflow to regulate inner pressure of the bottle(1) and however cut off outflow of milk, is installed on the bottle(1). The check valve(5) of the present invention may be installed on any part of the bottle(1), preferably, in upper part of the bottle(1).

Preferably, the metallic valve body(9) of the check valve(5) is also coated with resin as like the magnetic valve disk(8) in order to prevent harmful contact between milk contained in the bottle(1) and the surface of the metallic valve body(9).

The small orifice(12) is formed in the metallic valve body(9) and closed with the magnetic valve disk(8) to stop outflow of milk contained in the bottle. The magnetic valve disk(8) closely adhere to the metallic valve body(9) by means of magnetic force to cover the small orifice(12) so as to stop outflow of milk but to allow inflow of air.

When baby suck in milk through the nipple(2), the second inner tube(10), the outer extension tube(11) and the first inner tube(4), the inside pressure of the bottle(1) is reduced to inhale air from outside through the check valve(5).

At this time, the check valve(5) serves as a regulator which controls air flow. When baby stop sucking, the reduced pressure of the bottle(1) which has been formed by the suction, is released by inhalation of air through the second inner tube(10), the outer extension tube(11) and the first inner tube(4) and concurrently by drawing in milk remaining in the tubes.

Optionally, the metallic valve body(9) and magnetic valve disk(8) may contain holes through which the outer extension tube(11) is inserted.

### Brief Description of the Drawings

The above object and other advantages of the present invention will become more apparent by describing in detail a preferred embodiment thereof with references to the attached drawings, in which:

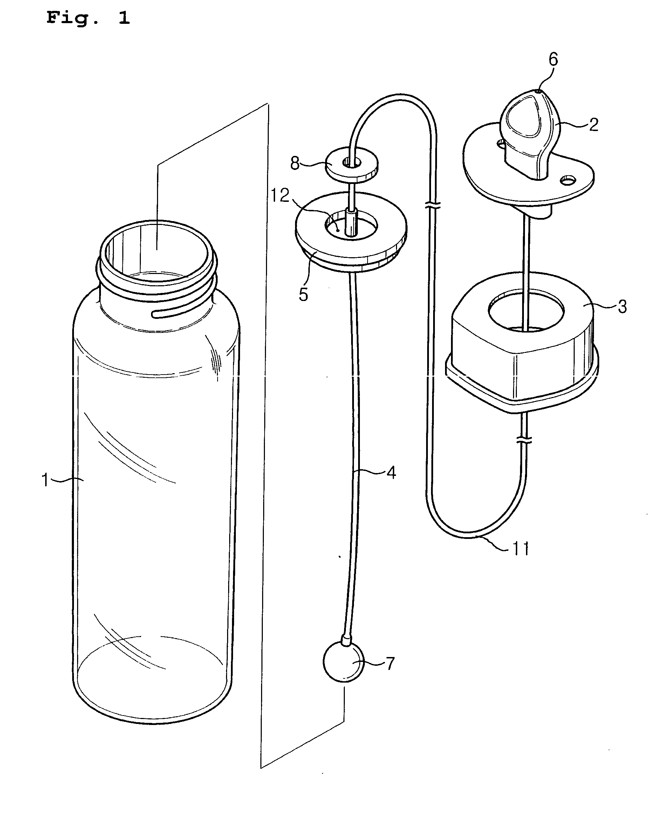

Fig. 1 is an exploded perspective view of the baby feeding device of the present invention.

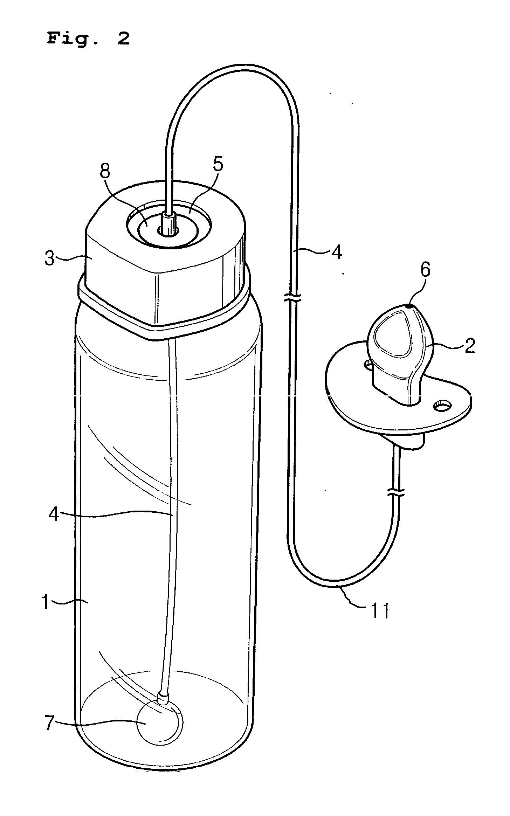

Fig. 2 is an assembled perspective view of the baby feeding device of the present invention.

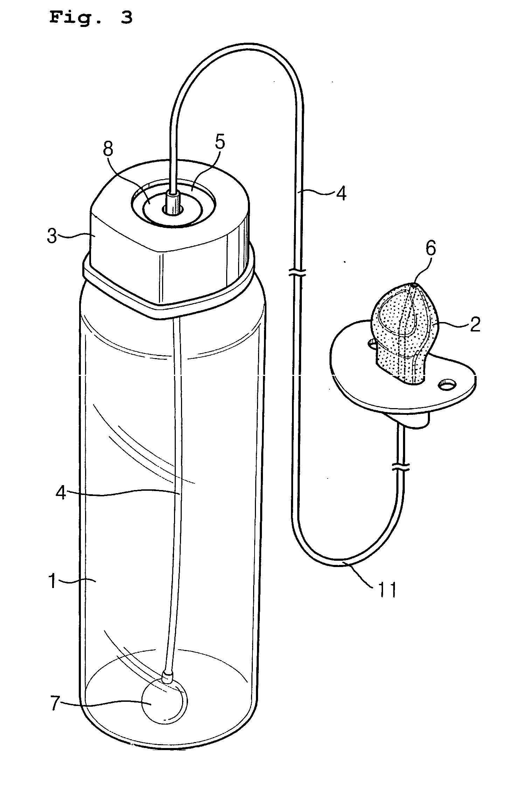

Fig. 3 is a perspective view of the baby feeding device which shows that the inside room of the nipple exclusive of the second inner tube, is stuffed with visco-elastic material.

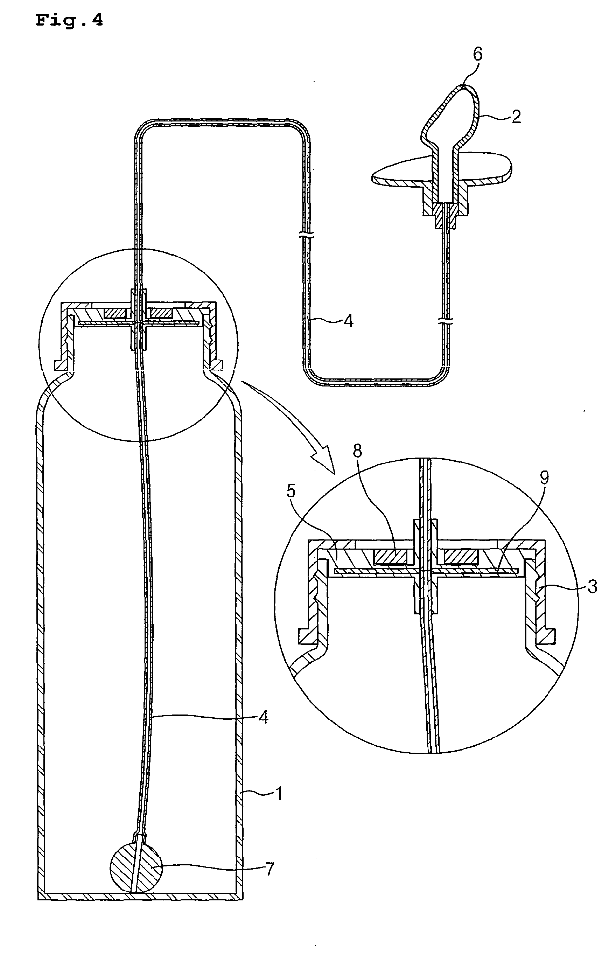

Fig. 4 is a longitudinal cross-sectional view of the baby feeding device of the present invention; and

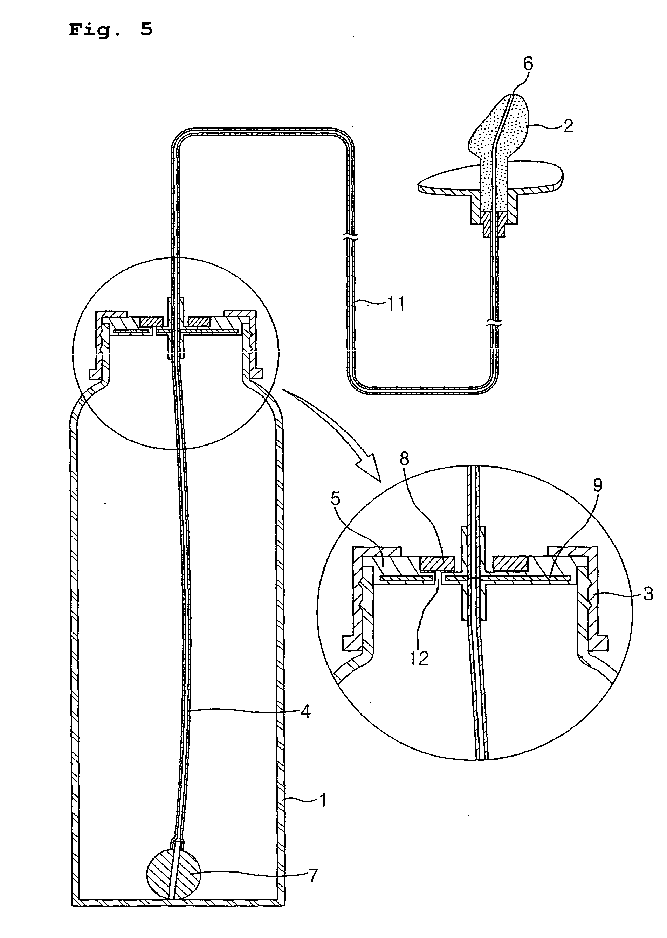

Fig. 5 is a longitudinal cross-sectional view of the baby feeding device shown in Fig.3.

### Best mode for Carrying Out the Present Invention

Hereinafter, the present invention will be described in detail with references to the accompanying drawings. The embodiments are given for illustration of the invention and not intended to be limiting the present invention.

When baby suck the nipple(2) connected with the upper end of the first inner tube(4) of the bottle(1) through the outer extension tube(11), milk is transferred from bottle(1) to baby mouth in sequence through the first inner tube(4), the outer extension tube(11) and the second inner tube(10) in inside of the nipple(2).

The inside pressure of the bottle(1) is reduced in proportion as milk is transferred, air inflows through the orifice(12) of the magnetic check valve of the present invention.

The length of said outer tube(11) is 10 cm to 200 cm, preferably 30 cm to 100 cm, more preferably 30 cm to 80cm.

The first and the second inner tube(4,10) and the outer tube(11) are made of flexible material. The tubes and the magnetic check valve prevent milk from leaking through outlet hole(6) of the nipple(2) by returning the milk residue inside the tubes back to the bottle(1) when baby's suction is ceased, by the action of suction force of the bottle(1) formed by the controlled air inflow of the magnetic check valve.

The baby feeding device of the present invention may also further comprises the second inner tube(10) which connects the outlet hole(6) of the nipple(1) with the end of the outer tube(11). The inside room of the nipple(2) exclusive of the second inner tube(10), is stuffed with visco-elastic material, preferably, such as silicon rubber.

### The Industrial Applicability

The baby feeding device of the present invention comprises the outer extension tube which enables baby to suck the nipple in various and free position.

The nipple of which inside room is stuffed with visco-elastic material keeps the original shape without collapse even in strong suction like human nipple, and does not decrease the suction force to be transmitted to the bottle.

The magnetic check valve of the present invention stops the outflow of milk from the bottle and controls the inflow of air to regulate inner pressure of the bottle. The precise control of inner pressure of the bottle by the magnetic check valve, enables the returning of the residual milk in the tubes back to the bottle when baby stop sucking, without slopping milk through the nipple.

While the present invention has been particularly shown and described with reference to a particular embodiment thereof, it will be understood by those skilled in the art that various changes and modifications can be made within the scope of the invention as hereinafter claimed.

## Claims

1. A baby feeding device having a nipple(2), a bottle(1), the first inner tube(4) deployed in inside of the bottle, a check valve(5) for air inflow, a coupling means(3) which combine said bottle(1) with said check valve(5) and a outer extension tube(11) which connects said first inner tube(4) with said nipple(2), wherein said check valve(5) comprises a magnetic valve disk(8) coated with visco-elastic materials such as rubber and a metallic valve body(9) which contains small orifice(12) for air inflow.

2. The baby feeding device of Claim 1, wherein the length of said outer tube(11) is 10 cm to 200 cm, preferably 30 cm to 100 cm, more preferably 30 cm to 80cm.

3. The baby feeding device of Claim 1, wherein said check valve(5) is united with said bottle(1) by said coupling means(3).

4. The baby feeding device of Claim 1, wherein the second inner tube(10) which connects an outlet hole(6) of said nipple(2) with an end of said outer tube(11), is deployed in inside of said nipple(2).

5. The baby feeding device of Claim 4, wherein the inside room of said nipple(2) exclusive of said second inner tube(10) is stuffed with visco-elastic material.

6. The baby feeding device of Claim 1, wherein said check valve(5) for air inflow controls air inflow and stops outflow of milk.

7. The baby feeding device of Claim 1, wherein said first inner tube(4) deployed in inside of said bottle(1) is flexible tube on which plummet(7) is arranged at the lower end of the tube.
